# EUROPEAN PATENT APPLICATION

(11) **EP 1 725 000 A1**
(43) Date of publication of application: **22.11.2006**
(21) Application number: 05104320.6
(22) Date of filing: 20.05.2005
(51) Int. Cl.: H04M 1/2745

(54) **Wireless handheld device and method for the creation and display of a contact list**

(60) Divisional application: 06100688.8
(71) Applicant: Research In Motion Limited, Waterloo, Ontario N2L 3W8 (CA)
(72) Inventor: Fyke, Steven Henry, Waterloo, Ontario N2J 4T3 (CA); Vuong, Thanh Vinh, Kitchener, Ontario N2E 4B9 (CA); Rose, Scott, Waterloo, Ontario N2K 4H5 (CA); Leung, Chris Kwok, Richmond Hill, Ontario L4S 1T6 (CA)
(74) Representative: Rickard, David John

(57) **Abstract**

A handheld device (100) is to generate a list of entities, in which no particular entity appears more than once, from participants in telephone communication sessions involving the handheld device (100), and one or more of a) participants in data communication sessions involving the handheld device (100) and b) records of one or more databases that are stored in the handheld device (100). The handheld device (100) may transmit the list, in full or in part, to a wireless accessory of the handheld device (100).

## Description

A wireless accessory may be paired with a handheld device to provide a user with at least a subset of the functionality provided by the personal handheld device.

In one example, the handheld device is a cellular telephone, able to be involved in telephone and data communication sessions, and the wireless accessory is a wireless headset or a wireless handset. The wireless accessory may serve the user as at least a voice input/output device ― functionality that is substantially a copy of the voice functionality of the cellular telephone itself. The wireless accessory may connect to the cellular telephone using a proprietary communication protocol or using an industry standard communication protocol, for example Bluetooth®.

A handheld device is to generate a list of entities, in which no particular entity appears more than once, from participants in telephone communication sessions involving the handheld device, and one or more of a) participants in data communication sessions involving the handheld device and b) records of one or more databases that are stored in the handheld device. The handheld device may transmit the list, in full or in part, to a wireless accessory of the handheld device.

### BRIEF DESCRIPTION OF THE DRAWINGS

Embodiments of the invention are illustrated by way of example and not limitation in the figures of the accompanying drawings, in which like reference numerals indicate corresponding, analogous or similar elements, and in which:

FIG. 1 is a simplified illustration of an exemplary handheld device, according to some embodiments of the invention;

FIG. 2 is a simplified block diagram of an exemplary handheld device, according to some embodiments of the invention;

FIG. 3 is a simplified illustration of an exemplary wireless communication system, according to some embodiments of the invention; and

FIG. 4 is a simplified block diagram of an exemplary wireless accessory, according to some embodiments of the invention.

It will be appreciated that for simplicity and clarity of illustration, elements shown in the figures have not necessarily been drawn to scale. For example, the dimensions of some of the elements may be exaggerated relative to other elements for clarity.

### DETAILED DESCRIPTION OF PREFERRED EMBODIMENTS

In the following detailed description, numerous specific details are set forth in order to provide a thorough understanding of embodiments of the invention. However it will be understood by those of ordinary skill in the art that the embodiments of the invention may be practiced without these specific details. In other instances, well-known methods, procedures, components and circuits have not been described in detail so as not to obscure the embodiments of the invention.

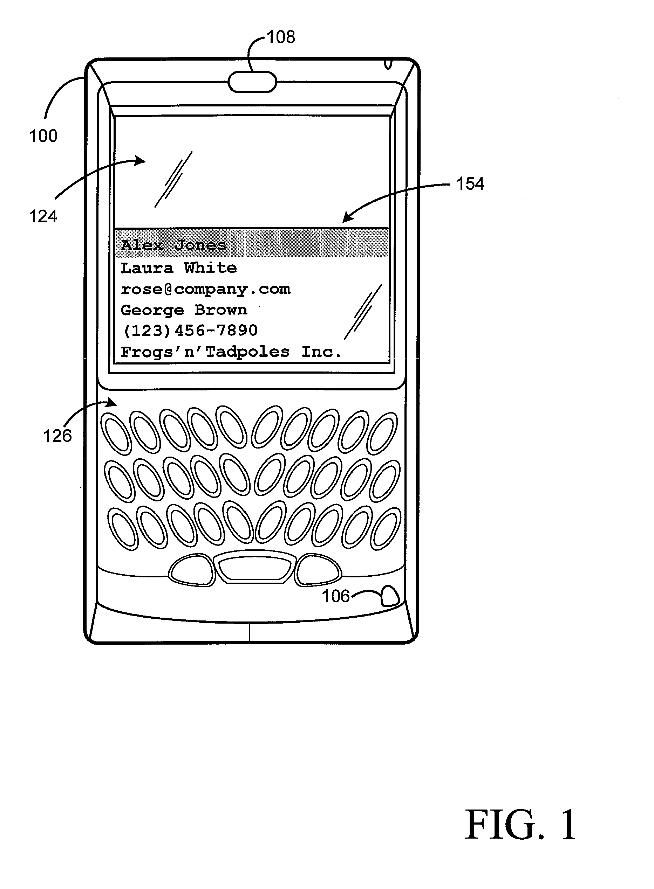

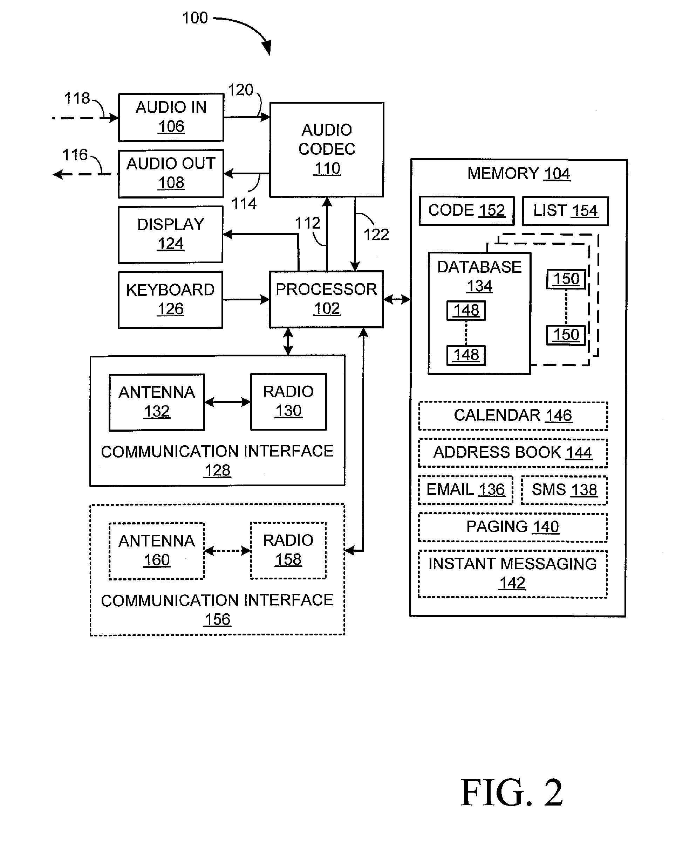

Reference is made now to Figures 1 and 2. Figure 1 is a simplified illustration of an exemplary handheld device 100, according to some embodiments of the invention, and figure 2 is a simplified block diagram of handheld device 100, according to some embodiments of the invention. For clarity, some components and features of handheld device 100 are not shown in figures 1 and 2 and are not described explicitly below.

Handheld device 100 includes a processor 102 and a memory 104 coupled to processor 102. Handheld device 100 includes an audio input element 106, for example a microphone, an audio output element 108, for example, a loudspeaker, and an audio coder-decoder (codec) 110. Codec 110 may be able to receive a digital representation 112 of sound waves from processor 102 and to output a corresponding analog signal 114 to audio output device 108. Audio output device 108 may be able to receive analog signal 114 and to output sound waves 116 corresponding to analog signal 114. In addition, audio input element 106 may be able to receive sound waves 118 and to output a corresponding analog signal 120 to codec 110. Codec 110 may be able to receive analog signal 120 and to output a digital representation 122 of analog signal 120 to processor 102.

Handheld device 100 includes a display 124 and a keyboard 126, both coupled to processor 102, and may include additional user interface elements that are not shown in figures 1 and 2. Keyboard 126 may be embedded in full or in part within display 124, i.e. display 124 may be a "touch screen".

Handheld device 100 includes a primary wireless communication interface 128, compatible with a wireless communication standard, coupled to processor 102 and including at least a radio 130 and an antenna 132. By way of wireless communication interface 128 and a communication infrastructure (not shown) that is external to handheld device 100, handheld device 100 may be able to establish telephone communication sessions with other devices (not shown). A user may initiate a telephone communication session to another entity, e.g. a person or a company, by, for example, typing on keyboard 126 a telephone number of a communication device that is associated with the other entity.

In another example, a user may initiate a telephone communication session to another entity by selecting the entity, or a telephone number of a communication device that is associated with the entity, from one or more databases 134 that are stored in memory 104. Handheld device 100 may dial the selected telephone number, and the entity may or may not receive the telephone communication session.

Alternatively, a communication device (not shown) that is associated with another entity may initiate a telephone communication session to handheld device 100. Handheld device 100 may receive a notification about the initiated telephone communication session from a communication infrastructure (not shown) that is external to handheld device 100. Handheld device 100 may notify the user about the incoming telephone communication session, and the user may or may not receive the telephone communication session.

In the description and claims, a user of handheld device 100 and another entity are said to be "participants" in a telephone communication session if handheld device 100 receives a notification about an incoming telephone communication session originating from a communication device associated with the other entity. Similarly, a user of handheld device 100 and another entity are said to be "participants" in a telephone communication session if handheld device 100 dials a telephone number of a communication device associated with the other entity.

By way of wireless communication interface 128 and a communication infrastructure (not shown) that is external to handheld device 100, handheld device 100 may be able to establish data communication sessions with other devices (not shown). Data communication sessions may include data in the form of plain text, data files, voice files, image files, movie files, streaming audio, streaming video, animation, or any other suitable data form.

For example, to initiate a data communication session to another entity, a user may begin by typing a message on keyboard 126 and typing an address of a communication device that is associated with the other entity. In another example, instead of typing an address of a communication device, a user may select the entity, or an address of a communication device that is associated with the entity, from one or more of databases 134. Handheld device 100 may transmit the message along with the address, and the external communication infrastructure may direct the message to its destination.

Alternatively, by way of a communication infrastructure (not shown) that is external to handheld device 100, a communication device (not shown) that is associated with another entity may transmit a message along with an address identifying handheld device 100.

In the description herein, a user of handheld device 100 and another entity are said to be "participants" in a data communication session if handheld device 100 receives a message originating from a communication device associated with the other entity. In addition, a user of handheld device 100 and another entity are said to be "participants" in a data communication session if handheld device 100 transmits a message along with an address identifying a communication device associated with the other entity.

A non-exhaustive list of examples for data communication sessions includes sending and receiving electronic mail (Email), sending and receiving instant messages, sending and receiving paging messages, sending and receiving short message service (SMS) messages, and any other suitable data communication sessions. For data communications supported by handheld device 100, memory 104 may store respective software modules to be executed by processor 102, for example, an Email software module 136, an SMS software module 138, a paging software module 140 and an instant messaging software module 142.

Memory 104 may store application modules, for example, an "address book" application module 144 and a "calendar" application module 146, to manage and use one or more of databases 134.

Address book application module 144 may, for example, manage one of databases 134 and may use records 148 that include information related to entities. A non-exhaustive list of examples for information to be stored in records 148 includes the names of people and companies, telephone numbers, Email addresses, SMS addresses, instant messaging addresses, instant messaging nicknames, and any other suitable information related to entities.

Calendar application module 146 may, for example, manage another of databases 134 and may use records 150 that include information related to calendar events. A non-exhaustive list of examples for such calendar events includes meetings, appointments, holidays, and any other suitable calendar events. Records 150 may include information related to the calendar events, for example, dates, hours, durations, locations and identities of entities involved in the calendar events.

According to embodiments of the invention, memory 104 may store executable code 152 which, when executed by processor 102, generates a list 154 of entities. No particular entity appears more than once in list 154. Executable code 152 generates list 154 from participants in telephone communications sessions and one or more of a) participants in data communication sessions, and b) records of databases 134. List 154 may be stored permanently in memory 104 or may be stored temporarily.

List 154 may be displayed, in full or in part, on display 124 to notify a user about participants in telephone and data communication sessions, and about entities related to calendar event. A user may choose to contact an entity identified in list 154 and may, for example, choose an identifier of that entity from list 154 and initiate a telephone or data communication session with that entity.

Identifiers of entities, as appear in list 154 on display 124 may be, for example, retrieved from records 148, and may be names of persons, names of companies, Email addresses, instant messaging addresses, instant messaging nicknames, and any other suitable information related to entities. If an entity is not included in records 148, an address or telephone number attached to a communication session may be used as an identifier in list 154 on display 124.

The content of list 154 may vary with time. Code 152 may use pre-defined and/or user-programmable rules to determine which entities to include in list 154 at a particular time and in what order. A non-exhaustive list of considerations to be taken by code 152 includes the number of times a particular entity was a participant in telephone and/or data communication sessions, the timing of telephone and/or data communication sessions in which a particular entity was a participant, the time at which a user searched one or more of databases 134 for a particular entity, the timing of calendar events in which a particular entity is involved, and any other suitable considerations.

For example, if a user has an appointment scheduled with Laura White, received an e-mail from Frogs'n'Tadpoles Inc., then called (123) 456-7890, then received two SMS messages from George Brown, then sent an e-mail to the e-mail address rose@company.com, and then missed two calls from Alex Jones, list 154 may list these entities and identifiers as shown in figure 1.

As shown in figure 2, handheld device 100 may optionally include a secondary communication interface 156, compatible with a wireless communication standard that is different from the wireless communication standard that communication interface 128 is compatible with. Communication interface 156 may be coupled to processor 102 and may include at least a radio 158 and an antenna 160.

For example, handheld device 100 may be "Bluetooth®-enabled", and communication interface 156 may comply with Bluetooth® core specifications v1.1, published February 22, 2001 by the Bluetooth® special interest group (SIG) and/or with Bluetooth® core specifications v1.2, published November 5, 2003. However, it will be obvious to those of ordinary skill in the art how to modify the following for other existing Bluetooth® standards or future related standards.

Alternatively, communication interface 156 may comply with any other suitable standard, for example Zigbee™. By way of communication interface 156, handheld device 100 may be able to communicate with other devices that comply with the same standard as communication interface 156.

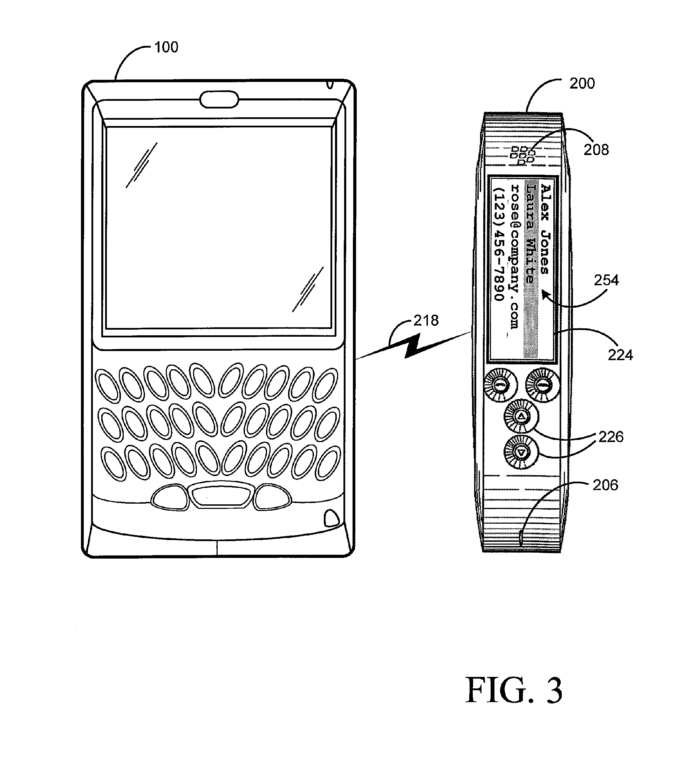

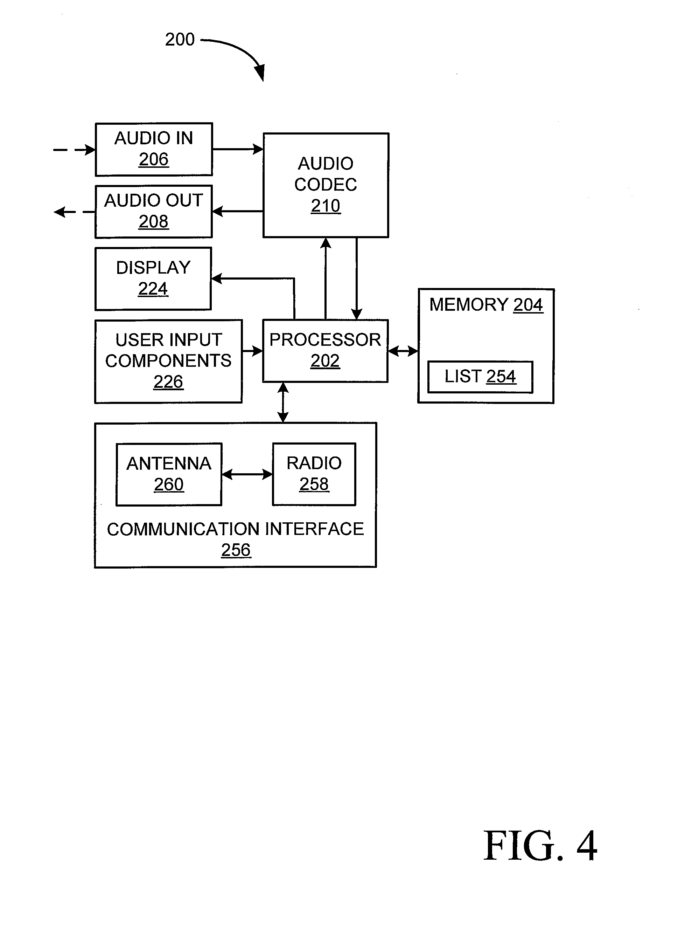

Figure 3 shows a simplified illustration of an exemplary wireless communication system including handheld device 100 and an exemplary wireless accessory 200, both Bluetooth®-enabled, according to some embodiments of the invention. In addition, reference is made to figure 4, which is a simplified block diagram of wireless accessory 200, according to some embodiments of the invention. For clarity, some components and features of wireless accessory 200 are not shown in figures 3 and 4 and are not described explicitly below.

Wireless accessory 200 may be a Bluetooth®-enabled headset, a Bluetooth®-enabled handset or any other suitable type of wireless accessory. Wireless accessory 200 includes a processor 202, a memory 204, an audio input element 206, an audio output element 208, an audio codec 210, a display 224, one or more user input components 226, and a wireless communication interface 256. Any of user input components 226 may be embedded within display 224, i.e. display 224 may be a "touch screen". Wireless accessory 200 may include additional user interface elements that are not shown in figures 3 and 4.

Memory 204, audio codec 210, display 224, user input components 226 and wireless communication interface 256 are coupled to processor 202. Audio input element 206 and audio output element 208 are coupled to audio codec 210. Communication interface 156 includes at least a radio 258 and an antenna 260 and is compatible with Bluetooth® core specifications v1.1 and/or Bluetooth® core specifications v1.2.

Handheld device 100 and wireless accessory 200 may be able to communicate with one another through wireless communication interfaces 156 and 256, respectively. Handheld device 100 may be able to selectively assign operations to functionality provided by wireless accessory 200. For example, a user may choose to use audio input element 104 and audio output element 106 for a particular telephone communication session, and may choose to use audio input element 204 and audio output element 206 for another telephone communication session. Similarly, a user may use keyboard 126 and look at display 124 in one situation, and may use one or more of user input components 226 and look at display 224 in another situation.

According to some embodiments of the invention, handheld device 100 may transmit list 154, in full or in part, to wireless accessory 200, and wireless accessory 200 may include the received parts of list 154 in a list 254 in memory 204. Processor 202 may display list 254, in full or in part, on display 224.

List 154, as displayed on display 124, and list 254, as displayed on display 224, may provide a user with condensed information about "entities of interest" with whom the user may want to initiate a communication session.

A non-exhaustive list of examples for standards with which wireless communication interface 128 may comply includes Direct Sequence - Code Division Multiple Access (DS-CDMA) cellular radiotelephone communication, Global System for Mobile Communications (GSM) cellular radiotelephone, North American Digital Cellular (NADC) cellular radiotelephone, Time Division Multiple Access (TDMA), Extended-TDMA (E-TDMA) cellular radiotelephone, wideband CDMA (WCDMA), General Packet Radio Service (GPRS), Enhanced Data for GSM Evolution (EDGE), 3G and 4G communication.

Alternatively, handheld device 100 may be "802.11-enabled", and wireless communication interface 128 may comply with one or more of the following standards defined by the Institute of Electrical and Electronic Engineers (IEEE) for Wireless LAN MAC and Physical layer (PHY) specifications:

| Standard | Published | Maximum Speed | Frequency | Modulation |
|---|---|---|---|---|
| 802.11 | 1997 | 2 Mbps | 2.4 GHz | Phase-Shift |
| 802.11a | 1999 | 54 Mbps | 5.0 GHz | Orthogonal Frequency Division Multiplexing |
| 802.11b | 1999 | 11 Mbps | 2.4 GHz | Complementary Code Keying |
| 802.11g | 2003 | 54 Mbps | 2.4 GHz | Orthogonal Frequency Division Multiplexing |

However, it will be obvious to those of ordinary skill in the art how to modify the following for other existing WLAN standards or future related standards, including 802.11n.

A non-exhaustive list of examples for handheld device 100 includes a cellular phone, a smart phone, a personal digital assistant (PDA), an electronic mail (Email) client, a gaming device, a laptop computer, a notebook computer, a wireless terminal, and any other suitable mobile apparatus.

A non-exhaustive list of examples for processors 102 and 202 includes microprocessors, microcontrollers, central processing units (CPU), digital signal processors (DSP), reduced instruction set computers (RISC), complex instruction set computers (CISC) and the like. Furthermore, any of processors 102 and 202 may comprise more than one processing unit, may be part of an application specific integrated circuit (ASIC) or may be a part of an application specific standard product (ASSP).

A non-exhaustive list of examples for memories 104 and 204 includes any combination of the following:
a) semiconductor devices such as registers, latches, read only memory (ROM), mask ROM, electrically erasable programmable read only memory devices (EEPROM), flash memory devices, non-volatile random access memory devices (NVRAM), synchronous dynamic random access memory (SDRAM) devices, RAMBUS dynamic random access memory (RDRAM) devices, double data rate (DDR) memory devices, static random access memory (SRAM), universal serial bus (USB) removable memory, and the like;
b) optical devices, such as compact disk read only memory (CD ROM), and the like; and
c) magnetic devices, such as a hard disk, a floppy disk, a magnetic tape, and the like.

A non-exhaustive list of examples for antennae 132, 160 and 260 includes dipole antennae, monopole antennae, multilayer ceramic antennae, planar inverted-F antennae, loop antennae, shot antennae, dual antennae, omnidirectional antennae and any other suitable antennae.

While certain features of the invention have been illustrated and described herein, many modifications, substitutions, changes, and equivalents will now occur to those of ordinary skill in the art. It is, therefore, to be understood that the appended claims are intended to cover all such modifications and changes as fall within the spirit of the invention.

### COPYRIGHT NOTICE

A portion of the disclosure of this patent document contains material which is subject to copyright protection. The copyright owner has no objection to the facsimile reproduction by anyone of the patent document or patent disclosure, as it appears in the Patent and Trademark Office patent file or records, but otherwise reserves all copyright rights whatsoever.

## Claims

1. A handheld device (100) comprising:
a display (124);
a processor (102);
a first wireless communication interface (128) compatible with a first wireless communication standard, through which said handheld device (100) is able to be involved in telephone communication sessions and one or more types of data communication sessions; and
a memory (104) able to store one or more databases (134) and able to store executable code (152) which, when executed by said processor (102), generates a list (154) of entities, in which no particular entity appears more than once, from participants in telephone communication sessions involving said handheld device (100), and one or more of a) participants in data communication sessions involving said handheld device (100) and/or b) records of said databases (134).

2. The handheld device (100) of claim 1, wherein said executable code (152), when executed by said processor (102), considers one or more of the following when determining which entities to comprise in said list (154) and in what order:
how often a particular entity was a participant in telephone communication sessions involving said handheld device (100);
the timing of telephone communication sessions involving said handheld device (100) in which a particular entity was a participant;
how often a particular entity was a participant in data communication sessions involving said handheld device (100);
the timing of data communication sessions involving said handheld device (100) in which a particular entity was a participant; and
at which time a search of one of said one or more databases (134) for a particular entity was conducted.

3. The handheld device (100) of claim 1 or claim 2, wherein one of said one or more databases (134) comprises calendar events, and said executable code (152), when executed by said processor (102), considers the timing of calendar events involving a particular entity when determining which entities to comprise in said list (154) and in what order.

4. The handheld device (100) of any one of claims 1 to 3, wherein said first wireless communication standard is any one of global system for mobile communications (GSM), code division multiple access (CDMA) or 802.11.

5. The handheld device (100) of any one of claims 1 to 4, wherein one of said types of data communication sessions is any one of electronic mail, instant messaging or short message service (SMS) messaging.

6. The handheld device (100) of any one of claims 1 to 5, wherein entities are represented in said list (154) by identifiers and types of said identifiers are from a group comprising at least a name of a person, a name of a company, an electronic mail address and/or an instant messaging name.

7. The handheld device (100) of any one of claims 1 to 6, wherein said list (154) is to be displayed, in full or in part, on said display (124).

8. The handheld device (100) of any one of claims 1 to 7, further comprising:
a second wireless communication interface (156), compatible with a second wireless communication standard, through which said handheld device (100) is able to communicate with a wireless accessory (200) having a display (224),
wherein said executable code (152), when executed by said processor (102), controls said second wireless communication interface (156) to transmit said list (154), in full or in part, to said wireless accessory (200), to be displayed, in full or in part, on said display (224) of said wireless accessory (200).

9. The handheld device (100) of claim 8, wherein said second wireless communication standard is Bluetooth® or ZigBee™.

10. A method for a handheld device (100), the method comprising:
generating a list (154) of entities, in which no particular entity appears more than once, from participants in telephone communication sessions involving said handheld device (100), and one or more of a) participants in data communication sessions involving said handheld device (100) and b) records of one or more databases (134) that are stored in said handheld device (100).

11. The method of claim 10, wherein generating said list (154) comprises:
considering how often a particular entity was a participant in telephone communication sessions involving said handheld device (100) when determining which entities to comprise in said list (154) and in what order,
and/or
considering the timing of telephone communication sessions involving said handheld device (100) in which a particular entity was a participant when determining which entities to comprise in said list (154) and in what order,
and/or
considering how often a particular entity was a participant in data communication sessions involving said handheld device (100) when determining which entities to comprise in said list (154) and in what order,
and/or
considering the timing of data communication sessions involving said handheld device (100) in which a particular entity was a participant when determining which entities to comprise in said list (154) and in what order,
and/or
considering at which time a search of one of said one or more databases (134) for a particular entity was conducted when determining which entities to comprise in said list (154) and in what order
and/or
considering the timing of calendar events involving a particular entity when determining which entities to comprise in said list (154) and in what order.

12. The method of claim 10 or claim 11, further comprising:
displaying said list (154), in full or in part, on a display (124) of said handheld device (100).

13. The method of any one of claims 10 to 12, further comprising:
transmitting said list (154), in full or in part, to a wireless accessory (200).

14. The method of claim 13, wherein transmitting said list (154) comprises:
transmitting said list (154), in full or in part, in compliance to a Bluetooth® standard.

15. A method for a wireless accessory (200) in communication with a handheld device (100), the method comprising:
receiving a list (254), in full or in part, from said handheld device (100); and
displaying said list (254), in full or in part, on a display (224) of said accessory (200),
wherein said list (254) is a list of entities, in which no particular entity appears more than once, from participants in telephone communication sessions involving said handheld device (100), and one or more of a) participants in data communication sessions involving said handheld device (100) and b) records of one or more databases (134) that are stored in said handheld device (100).

16. The method of claim 15, wherein receiving said list (254) comprises:
receiving said list (254), in full or in part, in compliance with a Bluetooth® standard.

17. A wireless accessory (200) for communicating with a handheld device (100), the wireless accessory (200) comprising:
means for receiving a list (254), in full or in part, from said handheld device (100);
and
means for displaying said list (254), in full or in part, on a display (224) of said accessory (200),
wherein said list (254) is a list of entities, in which no particular entity appears more than once, from participants in telephone communication sessions involving said handheld device (100), and one or more of a) participants in data communication sessions involving said handheld device (100) and/or b) records of one or more databases (134) that are stored in said handheld device (100).

18. A computer program product for a handheld device (100), the computer program product comprising a computer readable medium (104) embodying program code means executable by a processor (102) of the handheld device (100) for implementing the method of any one of claims 10 to 14.

19. A computer program product for a wireless accessory (200), the computer program product comprising a computer readable medium (204) embodying program code means executable by a processor of the wireless accessory (200) for implementing the method of claim 15 or claim 16.

20. A communications infrastructure comprising at least one handheld device (100) according to any one of claims 1 to 9.
